# EUROPEAN PATENT APPLICATION

(11) **EP 2 395 062 A2**
(43) Date of publication of application: **14.12.2011**
(21) Application number: 11002938.6
(22) Date of filing: 07.04.2011
(51) Int. Cl.: C09J 7/02, C08L 83/10

(54) **Solventless releaser composition for use with silicone pressure-sensitive adhesives and release liner**

(30) Priority: 09.04.2010 JP 2010090519
(71) Applicant: Shin-Etsu Chemical Co., Ltd., Tokyo (JP)
(72) Inventor: Yamaguchi, Koichi, Annaka-shi Gunma-ken (JP); Kishita, Hirofumi, Annaka-shi Gunma-ken (JP)
(74) Representative: Merkle, Gebhard

(57) **Abstract**

A solventless releaser composition is provided comprising (A) an organopolysiloxane containing at least two alkenyl groups and at least one monovalent fluorinated substituent group and having a fluorine content of 30-50 wt% and a viscosity of 100-2,000 mPa-s at 25°C, (B) an organohydrogenpolysiloxane containing at least three SiH groups, (C) a reaction regulator, and (D) a platinum catalyst. The composition is coated and cured to a substrate to form a release liner for use with silicone pressure-sensitive adhesives.

## Description

### TECHNICAL FIELD

This invention relates to a solventless releaser composition capable of forming a cured silicone coating with a low surface energy and suited for use with silicone pressure-sensitive adhesives, and a release liner having the composition coated and cured to a substrate surface.

### BACKGROUND ART

For the purpose of mitigating or preventing the adhesion or bond between a substrate such as paper or plastic film and a pressure-sensitive adhesive (referred to as PSA), it is a common practice in the art to form a cured coating of silicone composition on a substrate surface to impart release properties. This is generally referred to as "release liner."

Among other PSAs, silicone-based PSAs find a wide range of applications because they are based on organopolysiloxanes having excellent characteristics including heat resistance, freeze resistance, chemical resistance, electric insulation and low toxicity. Since silicone-based PSAs have a very high adhesive strength, a cured silicone coating formed on the substrate surface must have excellent release properties in order that the PSA tape or label coated with the silicone-based PSA be readily peeled from the substrate.

Prior art silicone compositions known to form cured silicone coatings with improved release properties include a curable coating composition comprising (A) an organopolysiloxane having a perfluoroalkyl group of the formula: CₙF₂ₙ₊₁CH₂CH₂- wherein n is an integer of at least 1 and an alkenyl group, (B) a platinum-containing hydrosilylation catalyst, and (C) an organohydroxypolysiloxane crosslinker as disclosed in USP 4,736,048, and a curable silicone composition comprising (a) an organopolysiloxane having a perfluoropolyether group of the formula: F[CF(CF₃)CF₂O]nCF(CF₃)CF₂OCH₂CH₂CH₂- wherein n is an integer of 1 to 5 and an alkenyl group, (b) an organohydrogenpolysiloxane, and (c) an addition reaction catalyst as disclosed in JP-B H04-76391.

These organopolysiloxane compositions are diluted with solvents before they are coated to substrates. As the solvent, fluoro-solvents are often used for the dissolution of fluorinated organopolysiloxane compositions. Although the fluoro-solvents are effective to dilute the fluorinated organopolysiloxane, they are expensive and detrimental to the natural environment when diffused in air.

As the silicone composition which can be diluted with non-fluoro-solvents and forms a cured silicone coating with improved release properties, JP-A H07-18185 discloses a silicone releaser composition comprising (A) an organopolysiloxane containing at least two silicon-bonded alkenyl groups and at least one silicon-bonded fluorinated substituent group in a molecule and having a fluorine content of 20 to 40% by weight, (B) an organohydrogenpolysiloxane containing at least three silicon-bonded hydrogen atoms in a molecule, and (C) a platinum group metal catalyst. When this silicone releaser composition is dissolved in a non-fluoro-solvent, the coating liquid appears to be a clear and uniform solution, but tends to foam due to a slight incompatibility. Particularly when the coating liquid is applied by a roll coater, numerous bubbles are generated by rotation of the coater. As a result, pinhole and cissing phenomena occur on the coating surface, causing partial heavy peeling.

### Citation List

Patent Document 1: USP 4,736,048 (JP-B H05-7434)
Patent Document 2: JP-B H04-76391
Patent Document 3: JP-A H07-18185

### DISCLOSURE OF INVENTION

An object of the invention is to provide a solventless releaser composition which can be applied to a substrate without a need for solvent dilution and form a cured coating having tenacious adherence, a low peeling force, and a minimal influence on the retention of adhesion; and a release liner having a cured coating of the composition formed on a substrate surface.

The inventors have found that a releaser composition comprising (A) an organopolysiloxane containing at least two alkenyl groups and at least one monovalent fluorinated substituent group and having a fluorine content of 30 to 50% by weight and a viscosity of 100 to 2,000 mPa-s at 25°C, (B) an organohydrogenpolysiloxane containing at least three SiH groups, (C) a reaction regulator, and (D) a platinum group metal catalyst is suited for use with silicone PSAs since it cures into a coating having tenacious adherence, a low peeling force, and a minimal influence on the retention of adhesion. The composition can be applied to a substrate in a solventless manner, i.e., without a need for organic solvent dilution, to form a releasing cured silicone coating at a low cost and without the risk of air pollution. Additionally, the cured coating has good water repellency, oil repellency, and heat resistance. The invention is predicated on this finding.

Accordingly, one embodiment of the invention is a solventless releaser composition for use with silicone pressure-sensitive adhesives, comprising (A) an organopolysiloxane containing at least two silicon-bonded alkenyl groups and at least one silicon-bonded monovalent fluorinated substituent group in a molecule and having a fluorine content of 30 to 50% by weight of the molecule and a viscosity of 100 to 2,000 mPa-s at 25°C, (B) an organohydrogenpolysiloxane containing at least three silicon-bonded hydrogen atoms in a molecule, (C) a reaction regulator, and (D) a platinum group metal catalyst. The composition has a viscosity of 50 to 2,000 mPa-s at 25°C.

Preferably, in component (A), the fluorinated substituent group is at least one group selected from monovalent groups having the following formulae (1) to (6):

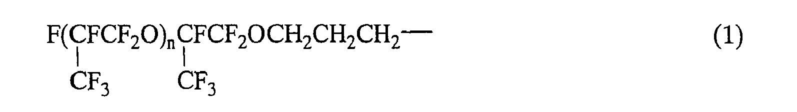

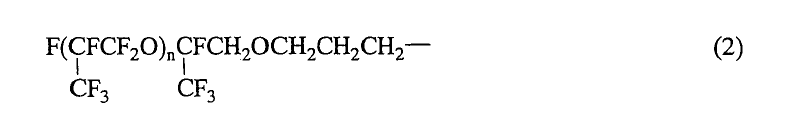

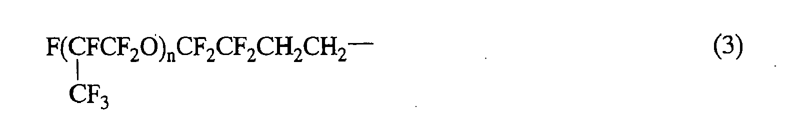

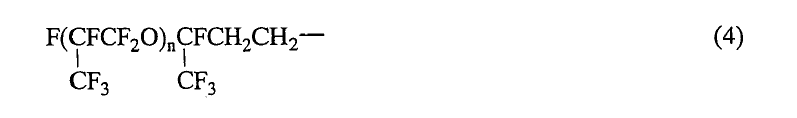

CₘF₂ₘ₊₁CH₂CH₂OCH₂CH₂CH₂- (5)

CₘF₂ₘ₊₁CH₂OCH₂CH₂CH₂- (6)

wherein n is an integer of 1 to 5 and m is an integer of 1 to 6.

Preferably, in the composition, there are present 100 parts by weight of component (A), 0.1 to 30 parts by weight of component (B), 0.01 to 5 parts by weight of component (C), and an amount of component (D) to provide 1 to 1,000 ppm of platinum group metal based on the weight of component (A).

In a preferred embodiment, component (C) is a fluorinated acetylene alcohol having the formula (7): 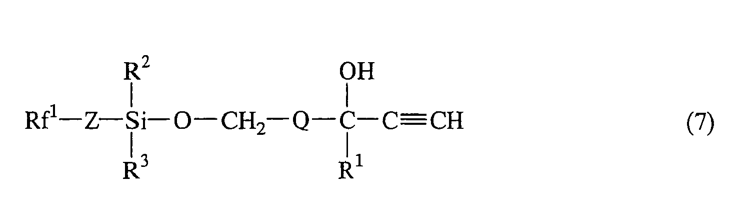 wherein Rf¹ is a perfluoroalkyl group of 3 to 100 carbon atoms which may be separated by an ether bond and which may be branched, Z is a single bond or a divalent organic group of 1 to 20 carbon atoms, Q is a divalent hydrocarbon group of 1 to 6 carbon atoms, R¹, R², and R³ are each independently an alkyl group of 1 to 4 carbon atoms.

Also provided is a release liner comprising a substrate having a surface and a cured coating of the composition defined above on the substrate surface.

### ADVANTAGEOUS EFFECTS OF INVENTION

The solventless releaser composition can be effectively coated and cured into a coating having improved release properties, the cured coating being free of pinholes and cissing. The composition is not only suited in the release liner application for use with silicone PSA tapes and labels, but also finds application as a water repellent agent, oil repellent agent, and heat resistant coating in food packages or the like.

### DESCRIPTION OF EMBODIMENTS

Component (A) is an organopolysiloxane containing at least two, specifically 2 to 20, preferably 2 to 10 silicon-bonded alkenyl groups and at least one, specifically 1 to 1,000, preferably 2 to 500 silicon-bonded monovalent fluorinated substituent group in a molecule and having a fluorine content of 30 to 50% by weight of the molecule and a viscosity of 100 to 2,000 mPa-s at 25°C.

The fluorine content within the molecule is 30 to 50% by weight and preferably 35 to 45% by weight. An organopolysiloxane having a fluorine content of more than 50 wt% is of excessive quality whereas an organopolysiloxane having a fluorine content of less than 30 wt% results in a cured coating which exhibits less release to silicone PSAs.

The organopolysiloxane as component (A) should have a viscosity at 25°C of 100 to 2,000 mPa-s, and preferably 200 to 1,200 mPa-s. With a viscosity of less than 100 mPa-s, a corresponding composition has poor film properties, failing to achieve the desired release effect. With a viscosity of more than 2,000 mPa-s, a corresponding composition is difficult to coat. It is noted that the viscosity is measured by a rotational viscometer.

The organopolysiloxane as component (A) may be linear or branched. The preferred organopolysiloxane is a linear one having the following formula.

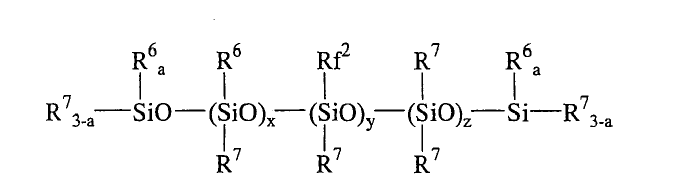

Herein R⁶ is an alkenyl group of 2 to 10 carbon atoms, preferably 2 to 6 carbon atoms. Examples include vinyl, allyl, propenyl, isopropenyl, butenyl, and hexenyl. Inter alia, vinyl and allyl are preferred. R⁷ is a substituted or unsubstituted monovalent hydrocarbon group of 1 to 10 carbon atoms, preferably 1 to 8 carbon atoms, free of aliphatic unsaturation. Examples include alkyl groups such as methyl, ethyl, propyl and butyl, cycloalkyl groups such as cyclohexyl, aryl groups such as phenyl and tolyl, and substituted forms of the foregoing in which some or all hydrogen atoms are replaced by hydroxyl, cyano or other radicals, such as hydroxypropyl and cyanoethyl. Inter alia, methyl, ethyl and phenyl are preferred. The subscript "a" is 1, 2 or 3; x, y and z are integers in the range: 0 ≤ x ≤ 5, 1 ≤ y ≤ 1,000, and 2 ≤ z ≤ 2,000, preferably 0 ≤ x ≤ 2, 1 ≤ y ≤ 500, and 2 s z ≤ 1,000.

Rf² is a monovalent fluorinated substituent group, which is preferably selected from monovalent groups having the following formulae (1) to (6) and mixtures thereof.

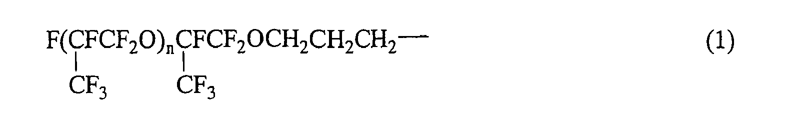

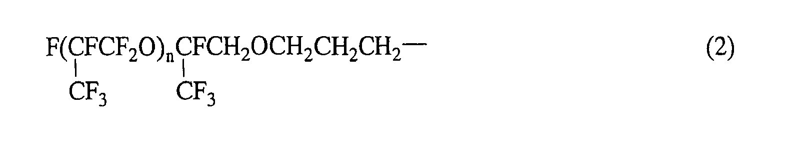

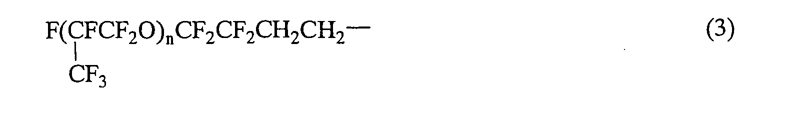

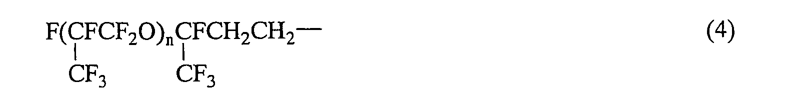

CₘF₂ₘ₊₁CH₂CH₂OCH₂CH₂CH₂- (5)

CₘF₂ₘ₊₁CH₂OCH₂CH₂CH₂- (6)

Herein n is an integer of 1 to 5 and m is an integer of 1 to 6.

Examples of the organopolysiloxane as component (A) are given below, but not limited thereto.

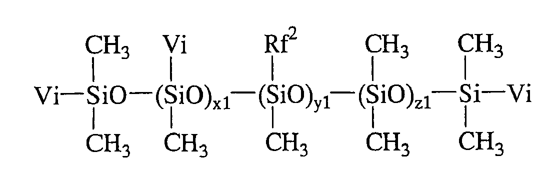

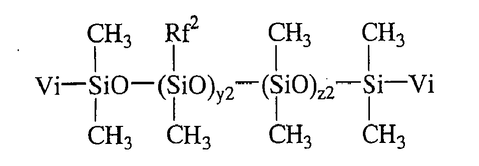

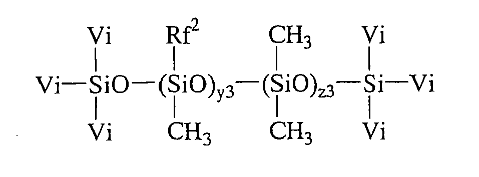

Herein Rf² is as defined above, and Vi stands for vinyl. The subscripts x1, y1 to y3, and z1 to z3 are integers in the range: 0 ≤ x1 ≤ 5, 1 ≤ y1 ≤ 1,000, 1 ≤ y2 ≤ 200, 1 ≤ y3 ≤ 1,000, 2 ≤ z1 ≤ 2,000, 2 ≤ z2 ≤ 500, and 2 ≤ z3 s 2,000. In each formula, x1, y1 to y3, and z1 to z3 are selected as appropriate to provide a fluorine content and viscosity in the desired ranges.

Component (B) is an organohydrogenpolysiloxane containing at least three, preferably 3 to 200, and more preferably 3 to 100 silicon-bonded hydrogen atoms (i.e., Si-H groups) in a molecule. An organohydrogenpolysiloxane containing at least one, more preferably 1 to 50 silicon-bonded fluorinated substituent group in a molecule and having a fluorine content of 10 to 45% by weight of the molecule is preferred for compatibility with component (A) and the cured coating's release to silicone PSAs. Addition reaction takes place between Si-H groups in component (B) and alkenyl groups in component (A) to form a cured coating.

The organohydrogenpolysiloxane as component (B) may have a linear, branched, cyclic or three-dimensional network structure. The silicon-bonded hydrogen atom (i.e., Si-H group) may be located at the end and/or an intermediate (or non-terminus) position of the molecular chain. The organohydrogenpolysiloxane prefers to have at least hydrogen atom bonded to silicon atom at a non-terminus position of the molecular chain and also prefers to be free of a Si-H group at the end of the molecular chain. Typical of the organohydrogenpolysiloxane are linear ones having the following formula. 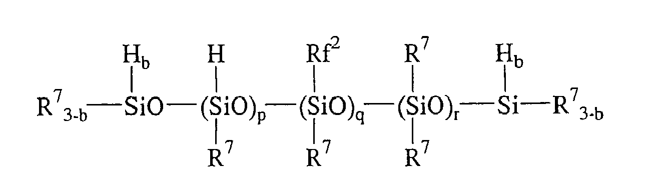 Herein R⁷ and Rf² are as defined above, b is 0 or 1, p, q and r are integers in the range: 1 ≤ p ≤ 200, 0 ≤ q ≤ 100, and 0 ≤ r s 100, preferably 3 ≤ p ≤ 100, 1 ≤ q s 50, and 1 ≤ r ≤ 50, with the proviso: 3 ≤ p+2b.

Examples of the organohydrogenpolysiloxane as component (B) are given below, but not limited thereto. 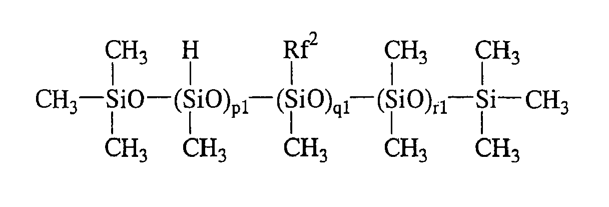 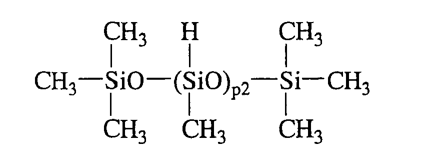 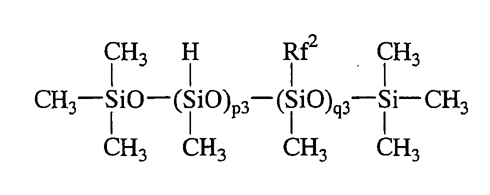 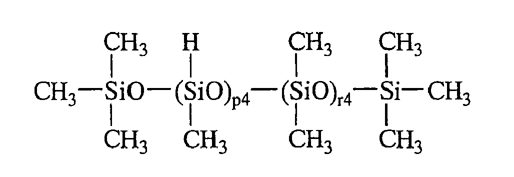 Herein Rf² is as defined above, p1 to p4, q1, q3, r1 and r4 are integers in the range: 3 ≤ p1 ≤ 100, 3 ≤ p2 ≤ 100, 3 ≤ p3 ≤ 100, 3 ≤ p4 ≤ 100, 1 ≤ q1 ≤ 50, 1 ≤ q3 ≤ 50, 1 ≤ r1 ≤ 50, and 1 ≤ r4 ≤ 50.

The organohydrogenpolysiloxane as component (B) is preferably blended in an amount of 0.1 to 30 parts, more preferably 0.5 to 20 parts by weight per 100 parts by weight of component (A). Outside the range, the composition may become less curable or the cured composition may have poor physical properties.

Component (C) is a reaction regulator which may be any of compounds known to control the addition reaction. For example, organonitrogen compounds, organophosphorus compounds, organosilicon compounds, acetylene compounds, and oxime compounds are useful. Preferred are 3-methyl-1-butyn-3-ol, acetylene alcohols such as fluorinated acetylene alcohols of the formula (7) below and silylated acetylene alcohols, and silicon compounds such as divinyltetramethyldisiloxane and tetravinyltetramethylcyclotetrasiloxane.

Typical of the reaction regulator as component (C) is a fluorinated acetylene alcohol having the formula (7). 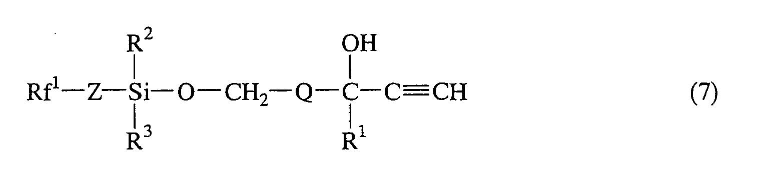 Herein Rf¹ is a perfluoroalkyl group of 3 to 100 carbon atoms which may be separated by an ether bond and which may be branched, Z is a single bond or a divalent organic group of 1 to 20 carbon atoms, Q is a divalent hydrocarbon group of 1 to 6 carbon atoms, R¹, R², and R³ are each independently an alkyl group of 1 to 4 carbon atoms.

In formula (7), Rf¹ is a perfluoroalkyl group of 3 to 100 carbon atoms, preferably 3 to 50 carbon atoms, which may be separated by an ether bond and which may be branched. Exemplary of Rf¹ are the following structures wherein n and m are integers in the indicated range.

| | |
|---|---|
| C_{nF2n+1} | n = 3 to 10 |
| CF₃O-(CF₂CF₂O)ₙCF₂- | n = 1 to 14 |
| C₂F₅O-(CF₂CF₂O)ₙ-CF₂- | n = 0 to 13 |
| 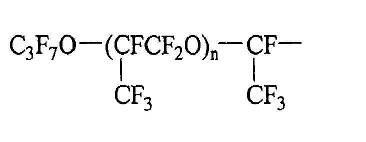 | n = 0 to 30 |
| C₃F₇O-(CF₂CF₂CF₂O)ₙ-CF₂CF₂- | n = 0 to 8 |
| C₃F₇O-(CF₂CF₂O)ₙ-(CF₂O)ₘ-CF₂- | n ≤ 1, m ≤ 1, 2n+3m ≤ 30 |

Z is a single bond or a divalent organic group of 1 to 20 carbon atoms, preferably 2 to 10 carbon atoms. Suitable divalent organic groups include alkylene, arylene, oxyalkylene, oxyarylene groups, and combinations thereof. The divalent organic group is not particularly limited as long as the carbon count is 1 to 20. An oxygen atom, nitrogen atom, carbonyl radical or the like may intervene in the organic group. Exemplary of Z are the following structures:

-(CH₂)ₛ-

wherein s is an integer of 1 to 10, preferably 2 to 4,

-CH₂-O-(CH₂)ₜ-

wherein t is an integer of 1 to 9, preferably 2 to 4, 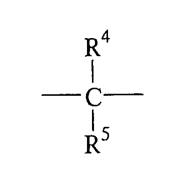 wherein R⁴ and R⁵ are each independently hydrogen or a monovalent C₁-C₉ hydrocarbon group, for example, hydrogen, alkyl such as methyl, ethyl or propyl, cycloalkyl such as cyclohexyl, or aryl such as phenyl, 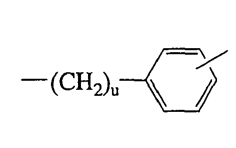 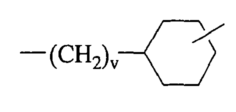 wherein u and v each are an integer of 0 to 4, preferably 0 to 2.

Q is a divalent C₁-C₆ hydrocarbon group, for example, alkylene such as methylene, ethylene, n-propylene, n-butylene or isobutylene, or arylene such as phenylene. Inter alia, methylene and ethylene are preferred.

R¹, R², and R³ are each independently a C₁-C₄ alkyl group, for example, methyl, ethyl, n-propyl, isopropyl, n-butyl, isobutyl or t-butyl. Preferably R¹ is methyl, and R² and R³ are n-butyl.

The reaction regulator is preferably blended in an amount of 0.01 to 5 parts, more preferably 0.02 to 3 parts by weight per 100 parts by weight of component (A). Less than 0.01 pbw of the regulator may allow the composition to gel whereas more than 5 pbw of the regulator may inhibit the composition from curing.

Component (D) is a platinum group metal catalyst which promotes addition reaction between components (A) and (B).

It may be any of well-known catalysts including platinum, palladium and rhodium base catalysts. Of these, platinum base catalysts are preferred, for example, chloroplatinic acid, alcohol solution of chloroplatinic acid, and complexes of chloroplatinic acid with olefins or vinylsiloxanes.

The platinum group metal catalyst may be used in a catalytic amount. It is preferred, from the standpoints of reactivity to form a cured coating and economy, to use the catalyst in a sufficient amount to provide 1 to 1,000 ppm, more preferably 5 to 500 ppm of platinum group metal based on the weight of component (A).

If desired, additives including a stabilizer, heat resistance improver, filler, pigment, leveling agent, substrate adhesion improver, antistatic agent, defoamer, and non-reactive organopolysiloxane may be added to the composition as long as the objects of the invention are not compromised.

The composition may be prepared by mixing components (A), (B) and (C) in any well-known means such as a mixer or planetary mixer at room temperature until uniform. Preferably component (D) is admixed immediately before coating. For each component, a single compound or a mixture of compounds may be used.

The composition should have a viscosity of 50 to 2,000 mPa-s at 25°C, preferably 10 to 1,500 mPa-s at 25°C. If the viscosity is below the range, an outstanding amount of mist will evolve during high-speed coating and the desired release effect is not obtainable. A viscosity beyond the range interferes with coating of the composition, for example, the coated surface loses smoothness, and high-speed coating is difficult.

The composition is coated and cured to a surface of a substrate to form a releasing cured coating on the substrate surface, which is ready for use as release liner. Examples of the substrate include plastic films and sheets made of synthetic resins such as polyester, polypropylene, polyethylene, polyethylene terephthalate (PET), polyvinyl chloride, polytetrafluoroethylene, and polyimide, paper sheets such as glassine paper, kraft paper and clay-coated paper, laminate paper substrates such as polyethylene-laminated wood-free paper and polyethylene-laminated kraft paper, and metal foils such as aluminum foil.

In applying the composition to substrates, any well-known techniques including roll coating, gravure coating, wire doctor coating, air knife coating, and dipping may be used. The composition is typically applied in a coating weight of about 0.01 to 50 g/m², preferably 0.05 to 10 g/m², to a thickness of about 0.05 to 5 µm, and over the entire substrate surface or a portion of the substrate surface where release property is necessary.

The composition is preferably cured by heating at a temperature of 50 to 200°C, more preferably 100 to 160°C for a time of 1 second to 5 minutes, more preferably 10 seconds to 3 minutes.

### EXAMPLE

Examples of the invention are given below by way of illustration and not by way of limitation. All parts are by weight. The viscosity is measured at 25°C by a rotational viscometer, and the viscosity of a composition is measured immediately after its preparation.

### Example 1

A composition #1 was prepared by uniformly mixing 95.3 parts of an alkenyl and fluorinated substituent group-containing organopolysiloxane having formula (I) (alkenyl content 0.0034 mol/100 g, fluorine content 44.0 wt%, viscosity 1,080 mPa-s), 4.7 parts of an organohydrogenpolysiloxane having formula (III) (fluorine content 37.3 wt%) (to provide a Si-H group/Si-CH=CH₂ group molar ratio of 2.5), and 0.65 part of a reaction regulator having formula (IV). An amount of a chloroplatinic acid-vinylsiloxane complex salt was added to the mixture to provide 50 ppm of platinum. The resulting composition #1 had a viscosity of 980 mPa-s.

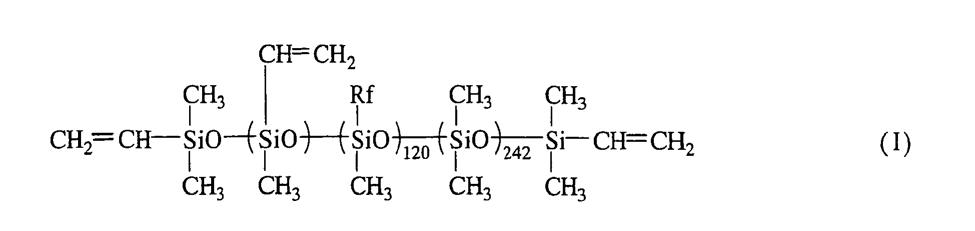

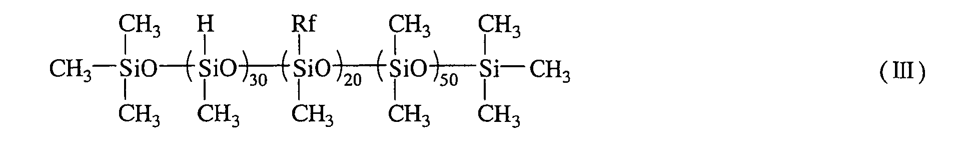

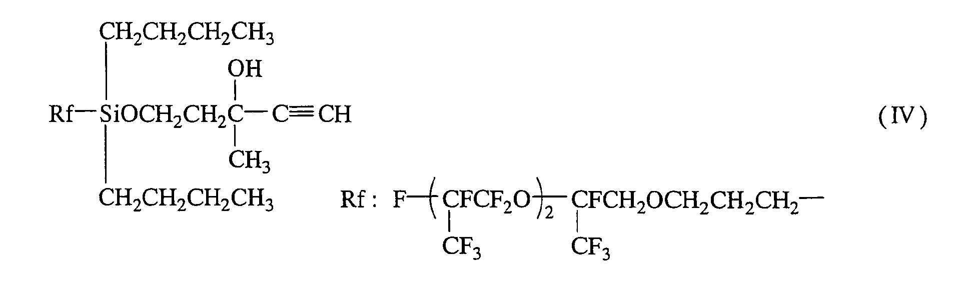

### Example 2

A composition #2 was prepared by uniformly mixing 86.4 parts of an alkenyl and fluorinated substituent group-containing organopolysiloxane having formula (II) (alkenyl content 0.0109 mol/100 g, fluorine content 38.8 wt%, viscosity 288 mPa-s), 13.6 parts of the organohydrogenpolysiloxane having formula (III) (to provide a Si-H group/Si-CH=CH₂, group molar ratio of 2.5), and 0.65 part of the reaction regulator having formula (IV). An amount of a chloroplatinic acid-vinylsiloxane complex salt was added to the mixture to provide 50 ppm of platinum. The resulting composition #2 had a viscosity of 300 mPa-s.

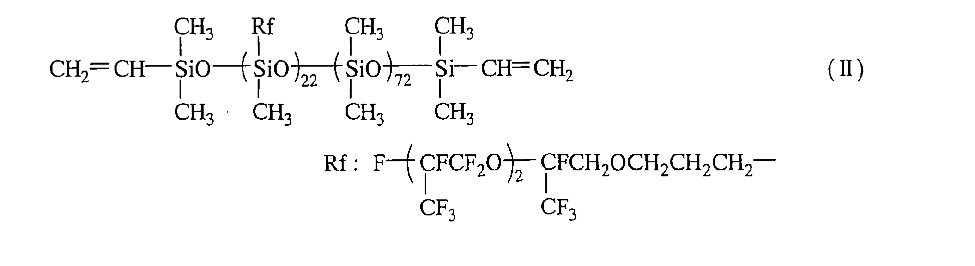

### Comparative Example 1

A composition #3 was prepared by the same procedure as in Example 1, except that 95.6 parts of an alkenyl and fluorinated substituent group-containing organopolysiloxane having formula (V) (alkenyl content 0.00318 mol/100 g, fluorine content 38.6 wt%, viscosity 2,540 mPa-s) was used instead of the organopolysiloxane having formula (I), and the amount of the organohydrogenpolysiloxane having formula (III) was changed to 4.4 parts so as to provide a Si-H group/Si-CH=CH₂ group molar ratio of 2.5. The resulting composition #3 had a viscosity of 2,310 mPa-s.

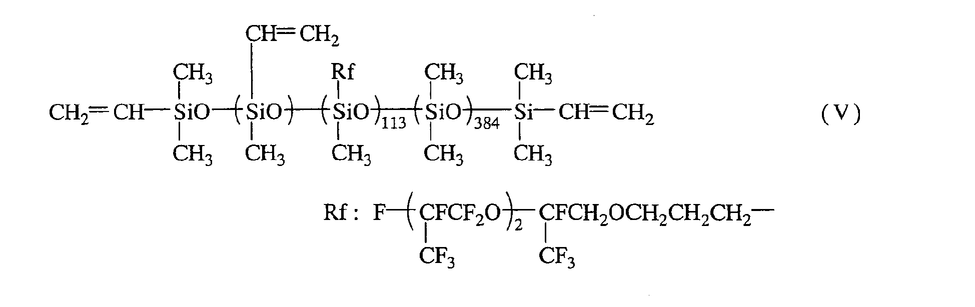

Each composition, immediately after its preparation, was coated onto a PET film substrate (50 µm thick) in a coating weight of 0.2 to 0.3 g/m² and cured by heating in a hot air dryer at 150°C for 60 seconds, obtaining a release liner. A similar attempt to coat and cure composition #3 failed to form a cured coating having a smooth surface due to a high viscosity, and the tests of release force and adhesion retentivity were no longer performed.

### Comparative Example 2

Composition #1 in Example 1 was diluted with hydrofluoroether Novec 7300 (3M Sumitomo Co., Ltd.) as a fluoro-solvent to a solid concentration of 4.0 wt%. Using an RK control coater with coating bar No. 1 (RK Print-Coat Instruments), the dilution was immediately coated onto a PET film substrate (50 µm thick) in a dry coating weight of 0.2 to 0.3 g/m² and cured by heating in a hot air dryer at 150°C for 60 seconds, obtaining a release liner.

During the preparation of release film, it was evaluated how effectively a composition could be coated.
Ⓞ: Excellent (smooth and uniform coating surface)
○: Good (substantially uniform coating surface)
×: Poor (wrinkle or cissing on coating surface)

The release liners obtained in Examples and Comparative Examples are referred to as "separators", hereinafter. Using the separators, curability, adhesion, release force, and adhesion retentivity were evaluated by the tests described below. The results are shown in Table 1.

### a) Curability

The coating surface of the separator was rubbed with the finger, and visually observed whether or not it was smeared and rubbed (or crumbled) off.
○: no smear, no rub-off
Δ: some smear or rub-off
×: smear and rub-off

### b) Adhesion

After the separator was held in a thermostat tank at 40°C and 80% RH for a certain period, the coating surface was rubbed hard 10 times with the finger. The storage period (days) until the coating surface was rubbed off indicated an extent of adhesion.

### c) Release force

A silicone PSA tape Nitoflon 903UL (19 mm wide, by Nitto Denko Corp.) was applied onto the separator and aged under a load of 25 g/cm² at 25° C for 20 hours, at 70° C for 20 hours, or at 70°C for 7 days. Using a tensile tester, the PSA tape was peeled from the separator at an angle of 180° and a pull rate of 0.3 m/min. The force (N/19 mm) required for peeling is reported as release force.

### d) Adhesion retentivity

A silicone PSA tape Nitoflon 903UL (as above) was applied onto the separator and aged under a load of 25 g/cm² at 70°C for 20 hours. To measure an adhesive strength as the reference, the same silicone PSA tape was applied onto a polytetrafluoroethylene (PTFE) plate and aged under the same conditions. Thereafter, the PSA tape was removed from the separator or PTFE, attached to a stainless steel plate, pressed by rolling back and forth a rubber roller of 2 kg, and held at room temperature for 3 hours. Using a tensile tester, the force required to peel the PSA tape from the steel plate at an angle of 180° and a pull rate of 0.3 m/min was measured as adhesive strength. Provided that the adhesive strength of the PSA tape which had been on the PTFE plate was 100, the adhesive strength of the PSA tape which had been on the separator was calculated and reported as percent adhesion retentivity of the separator.

**Table 1**

| Separator | | Example | | Comparative Example | |
|---|---|---|---|---|---|
| | | 1 | 2 | 1 | 2 |
| Coating | | ○ | Ⓞ | × | Ⓞ |
| Curability | | ○ | ○ | ○ | ○ |
| Adhesion | | > 14 days | > 14 days | > 14 days | > 14 days |
| Release force (N/19 mm) | 25°C/20 hr | 0.04 | 0.03 | - | 0.13 |
| | 70° C/20 hr | 0.05 | 0.04 | - | 0.28 |
| | 70° C/7 days | 0.10 | 0.09 | - | 2.66 |
| Adhesion retentivity (%) | | 100 | 100 | - | 100 |

## Claims

1. A solventless releaser composition for use with silicone pressure-sensitive adhesives, comprising
(A) an organopolysiloxane containing at least two silicon-bonded alkenyl groups and at least one silicon-bonded monovalent fluorinated substituent group in a molecule and having a fluorine content of 30 to 50% by weight of the molecule and a viscosity of 100 to 2,000 mPa-s at 25°C,
(B) an organohydrogenpolysiloxane containing at least three silicon-bonded hydrogen atoms in a molecule,
(C) a reaction regulator, and
(D) a platinum group metal catalyst,
the composition having a viscosity of 50 to 2,000 mPa-s at 25°C.

2. The releaser composition of claim 1 wherein in component (A), the fluorinated substituent group is at least one group selected from monovalent groups having the following formulae (1) to (6): 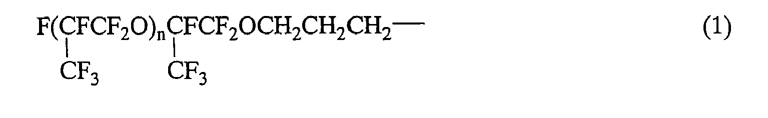 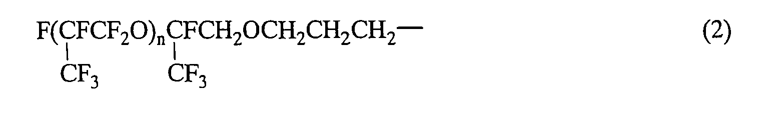 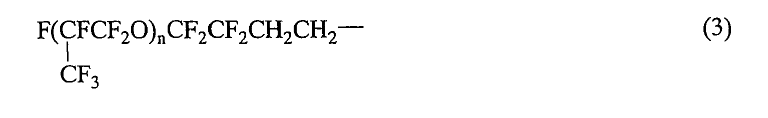 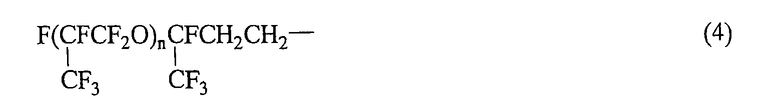
CₘF₂ₘ₊₁CH₂CH₂OCH₂CH₂CH₂ (5)
CₘF₂ₘ₊₁CH₂OCH₂CH₂CH₂- (6)
wherein n is an integer of 1 to 5 and m is an integer of 1 to 6.

3. The releaser composition of claim 1 or 2, comprising 100 parts by weight of component (A), 0.1 to 30 parts by weight of component (B), 0.01 to 5 parts by weight of component (C), and an amount of component (D) to provide 1 to 1,000 ppm of platinum group metal based on the weight of component (A).

4. The releaser composition of any one of claims 1 to 3 wherein component (C) is a fluorinated acetylene alcohol having the formula (7): 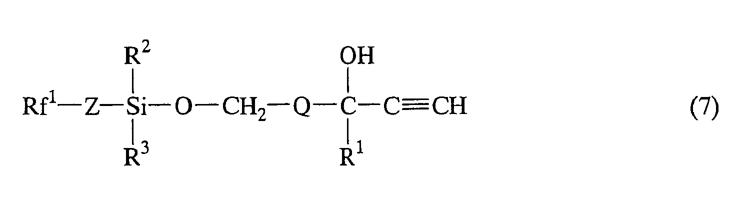 wherein Rf¹ is a perfluoroalkyl group of 3 to 100 carbon atoms which may be separated by an ether bond and which may be branched, Z is a single bond or a divalent organic group of 1 to 20 carbon atoms, Q is a divalent hydrocarbon group of 1 to 6 carbon atoms, R¹, R², and R³ are each independently an alkyl group of 1 to 4 carbon atoms.

5. A release liner comprising a substrate having a surface and a cured coating of the releaser composition of any one of claims 1 to 4 on the substrate surface.
